# EUROPEAN PATENT APPLICATION

(11) **EP 3 166 009 A1**
(43) Date of publication of application: **10.05.2017**
(21) Application number: 14899753.9
(22) Date of filing: 31.10.2014
(51) Int. Cl.: G06F 3/06

(54) **DATA PROCESSING METHOD AND DEVICE FOR STORAGE CARD**

(30) Priority: 15.08.2014 CN 201410403635
(71) Applicant: Yulong Computer Telecommunication Scientific (Shenzhen) Co., Ltd., Shenzhen, Guangdong 518057 (CN)
(72) Inventor: CHEN, Liwei, Shenzhen Guangdong 518057 (CN)
(74) Representative: Johnson, Richard Alan
(86) International application number: PCT/CN2014/090117
(87) International publication number: WO 2016/023276

(57) **Abstract**

The present disclosure discloses a data processing method for a storage card and a data processing device for a storage card. The present disclosure relates to the field of electronic apparatus applications, and solves the problem that the rate and accuracy of processing data of a secure digital card by a smart terminal reduces when multiple systems of the smart terminal are run. The method includes: determining the number of systems of a terminal and capacities of storage spaces required by the systems; partitioning a storage space of the storage card into areas according to the number of the systems and the capacities; and establishing a mapping relationship between the partitioned areas and the systems, so that each of the systems stores data into or reads data from the corresponding area of the storage card. The method is mainly for processing data of the secure digital card by the smart terminal.

## Description

### TECHNICAL FIELD

The present disclosure relates to the field of electronic equipment applications, and particularly to a data processing method for a storage card and a data processing device for a storage card.

### BACKGROUND

With the development of electronic equipment applications, digital cameras, multimedia players, and other portable devices are widely used, and high data processing requirements for portable devices, for example, smart terminals and storage cards are needed. The present technology provides a processing technology for data of a secure digital card, and the processing method includes following.

When multiple systems of a smart terminal are run, data of a secure digital card is not stored in a rule. Data of the multiple systems is stored in an interleaving manner, and the data is stored in the secure digital card in disorder.

For the process of realizing data processing of the secure digital card, the inventor discovers that the present technology includes at least following problems: when multiple systems of a smart terminal are run, as the data of the secure digital card is not stored in a rule, when one system accesses the secure digital card, interleaving access may occur, and the system may access data of other systems, which results in misreading of data, and reduction of the rate and accuracy of processing the data in the secure digital card by the smart terminal.

### SUMMARY

Embodiments of the present disclosure provides a data processing method for a storage card and a data processing device for a storage card, which can solve the problem that the rate and accuracy of processing data of a secure digital card by a smart terminal reduces when multiple systems of the smart terminal are run.

In a first aspect, the present disclosure provides a data processing method for a storage card. The method comprises: determining the number of systems of a terminal and capacities of storage spaces required by the systems; partitioning a storage space of the storage card into areas according to the number of the systems and the capacities of the storage spaces required by the systems; and establishing a mapping relationship between the partitioned areas and the systems, so that each of the systems stores data into or reads data from the corresponding area of the storage card.

In a second aspect, the present disclosure provides a data processing device for a storage card. The device comprises: a determining unit configured to determine the number of systems of a terminal and capacities of storage spaces required by the systems; a partitioning unit configured to partition a storage space of the storage card into areas according to the number of the systems and the capacities of the storage spaces required by the systems; and an establishing unit configured to establish a mapping relationship between the partitioned areas and the systems, so that each of the systems stores data into or reads data from the corresponding area of the storage card.

In a third aspect, the present disclosure provides a terminal for processing data of a storage card. The terminal comprises the device of the second aspect.

For the data processing method for the storage card and the data processing device for the storage card, the number of the systems of the terminal and the capacities of the storage spaces required by the systems can be determined, the storage space of the storage card is partitioned according to the number of the systems and the capacities, and the mapping relationship between the partitioned areas and the systems is established, so that each of the systems can store data into or read data from the corresponding area of the storage card. In the present technology, when multiple systems are run in the smart terminal, the rate and accuracy of processing the data of the secure digital card by the smart terminal reduce. Comparing with the technology, in the present disclosure, each of the systems can store data into or read data from the corresponding area of the storage card, and cannot store data into or read data from the area which is not mapped to any of the systems or the area which does not correspond to the system, thus an interleaving phenomenon that data of the other systems is accessed can be avoided, and the rate and accuracy of processing the data of the secure digital card by the smart terminal increase.

### BRIEF DESCRIPTION OF DRAWINGS

To better illustrate the technical solution of embodiments of the present disclosure or the present technology, the following descriptions will briefly illustrate the accompanying drawings described in the embodiments or the present technology. Obviously, the following described accompanying drawings are just some embodiments of the present disclosure. Persons skilled in the art may also derive other drawings from these accompanying drawings without creative efforts.
FIG. 1 is a flow chart of a data processing method for a storage card in accordance with an embodiment of the present disclosure.
FIG. 2 is a flow chart of another data processing method for a storage card in accordance with an embodiment of the present disclosure.
FIG. 3 is a diagrammatic view of a first data processing device for a storage card in accordance with an embodiment of the present disclosure.
FIG. 4 is a diagrammatic view of a second data processing device for a storage card in accordance with an embodiment of the present disclosure.
FIG. 5 is a diagrammatic view of a third data processing device for a storage card in accordance with an embodiment of the present disclosure.
FIG. 6 is a diagrammatic view of a fourth data processing device for a storage card in accordance with an embodiment of the present disclosure.
FIG. 7 is a diagrammatic view of a terminal for processing data of a storage card in accordance with an embodiment of the present disclosure.

### DETAILED DESCRIPTION

In conjunction with the drawings in the embodiments of the present disclosure, a clear, complete description for the technical solutions in the embodiments of the present disclosure is provided below. Apparently, the described embodiments are just a part rather than all of the embodiments of the present disclosure. All other embodiments obtained by persons skilled in the art according to the embodiments of the present disclosure without creative efforts should fall within the protection scope of the present disclosure.

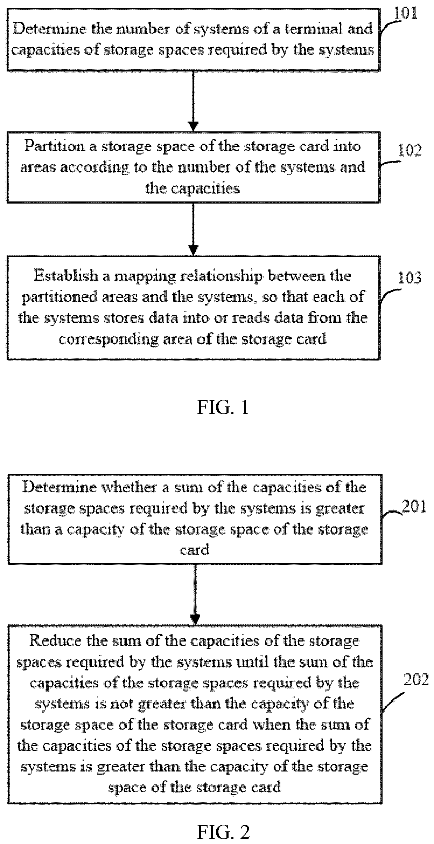

In an embodiment of the present disclosure, a data processing method for a storage card is provided. As illustrated by FIG. 1, the method includes following steps.

Step 101, the number of systems of a terminal and capacities of storage spaces required by the systems are determined.

A sum of the capacities of the storage spaces required by the systems does not exceed a capacity of a storage space of the storage card.

Step 102, the storage space of the storage card is partitioned into areas according to the number of the systems and the capacities of the storage spaces required by the systems.

The storage card can include a secure digital (SD) card, a multimedia card (MMC), a multimedia card, a trans flash (TF) card, and so on.

The area partition can be realized by following two manners.

The storage space of the storage card is partitioned equally according to the number of the systems, and the capacities of the partitioned areas are the same. The capacities of the storage spaces required by the systems are compared with the capacities of the partitioned areas one by one. When the capacity of the storage space required by one of the systems is greater than that of the corresponding partitioned area, the storage space which is not assigned to any of the systems or the storage space the system corresponding to which is not frequently used is incorporated into the corresponding partitioned area until the capacity of the corresponding partitioned area is not less than that of the storage space required by the one of the systems.

Or, the storage space of the storage card is partitioned according to the capacities of the storage spaces required by the systems. The capacities of the partitioned areas are compared with the capacities of the storage spaces required by the systems one by one, and the capacity of each of the partitioned areas is not less than that of the storage space required by the corresponding system.

Step 103, a mapping relationship between the partitioned areas and the systems is established, so that each of the systems can store data into or read data from the corresponding area of the storage card.

The mapping relationship indicates a one-to-one corresponding relationship between the partitioned areas of the storage card and the systems. Each of the systems just stores data into or reads data from the corresponding area of the storage card, and does not access the areas corresponding to the other systems.

For the data processing method for the storage card provided by the embodiment of the present disclosure, the number of the systems of the terminal and the capacities of the storage spaces required by the systems can be determined, the storage space of the storage card is partitioned according to the number of the systems and the capacities, and the mapping relationship between the partitioned areas and the systems is established, so that each of the systems can store data into or read data from the corresponding area of the storage card. In the present technology, when multiple systems are run in the smart terminal, the rate and accuracy of processing data of a secure digital card by the smart terminal reduce. Comparing with the technology, in the present disclosure, each of the systems can store data into or read data from the corresponding area of the storage card, and cannot store data into or read data from the area which is not mapped to any of the systems or the area which does not correspond to the system, thus an interleaving phenomenon that data of the other systems is accessed can be avoided, and the rate and accuracy of processing the data of the secure digital card by the smart terminal increase.

An embodiment of the present disclosure further provides another data processing method for a storage card to specifically illustrate the method of FIG. 1. Step 103, establishing the mapping relationship between the partitioned areas and the systems to cause each of the systems to store data into or read data from the corresponding area of the storage card includes: establishing a mapping relationship between physical addresses of the partitioned areas and the systems.

The following description will illustrate the mapping relationship by a use scenario.

For a smart terminal, for example a mobile phone, during a process of activating the smart terminal, when a storage card is detected, whether an area assignment for the storage card is finished is determined. When the area assignment is finished, the physical address of each area is mapped to the corresponding system. Each of the systems performs logic mapping according to the physical address, and stores data into or reads data from the corresponding area. For the part which is not mapped to one of the systems, including the part which is not mapped to any of the systems and the part which is mapped to the other systems, the one of the systems cannot access the part, and cannot store data into or read data from the part. When the area assignment for the storage card is not finished, an area assignment instruction for the storage card is executed. After finishing the area assignment, the mapping relationship is established according to the above steps.

Or during the use process, when a hot-plug storage card is detected, the user is prompted that the area assignment is not executed based on the systems, and the mobile phone needs to be reactivated to execute the area assignment. The mobile phone is reactivated, and the mapping relationship is established according to the above steps of activating the mobile phone.

For the data processing method for the storage card provided by the embodiment of the present disclosure, by establishing the mapping relationship between the physical addresses of the partitioned areas and the systems, each of the systems can just store data into or read data from the corresponding area, and cannot access the areas corresponding to the other systems and the area which does not correspond to any of the systems. Thus, an interleaving phenomenon that data of the other systems is accessed can be avoided, the complexity of storing or reading data reduces, and the rate and accuracy of processing the data of the secure digital card by the smart terminal increases.

An embodiment of the present disclosure further provides another data processing method for a storage card to specifically illustrate the method of claim 1. As illustrated by FIG. 2, in step 102, before partitioning the storage space of the storage card according to the number of the systems and the capacities of the storage spaces required by the systems, the method further includes following steps.

Step 201, whether a sum of the capacities of the storage spaces required by the systems is greater than a capacity of the storage space of the storage card is determined.

Step 202, when the sum of the capacities of the storage spaces required by the systems is greater than the capacity of the storage space of the storage card, the sum of the capacities of the storage spaces required by the systems is reduced until the sum of the capacities of the storage spaces required by the systems is not greater than the capacity of the storage space of the storage card.

Optionally, the area partition indicates that the storage space of the storage card is partitioned according to the number of the systems and the capacities corresponding to the systems. The number of the systems does not exceed that of the partitioned areas. Each of the systems corresponds to one of the partitioned areas. The capacity of the storage space of each of the partitioned areas is not less than that of the storage space required by the corresponding system.

For the data processing method for the storage card of the embodiment of the present disclosure, whether the sum of the capacities of the storage spaces required by the systems is greater than the capacity of the storage space of the storage card is determined. If yes, the sum of the capacities of the storage spaces required by the systems is reduced until the sum of the capacities of the storage spaces required by the systems is not greater than the capacity of the storage space of the storage card, which can ensure that the sum of the capacities of the storage spaces required by the systems is not greater than the capacity of the storage space of the storage card.

An embodiment of the present disclosure further provides another data processing method for a storage card to specifically illustrate the method of FIG. 2. Step 202, when the sum of the capacities of the storage spaces required by the systems is greater than the capacity of the storage space of the storage card, reducing the sum of the capacities of the storage spaces required by the systems until the sum of the capacities of the storage spaces required by the systems is not greater than the capacity of the storage space of the storage card includes: reducing the number of the systems of the terminal, or reducing the capacity of at least one of the storage spaces required by the systems.

For the data processing method for the storage card provided by the embodiment of the present disclosure, by reducing the number of the systems of the terminal, or reducing the capacity of at least one of the storage spaces required by the systems, it can be ensured that the sum of the capacities of the storage spaces required by the systems is not greater than the capacity of the storage space of the storage card.

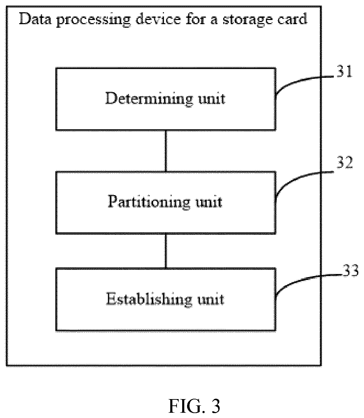

An embodiment of the present disclosure further provides a data processing device for a storage card. The device is configured to realize the above methods. As illustrated by FIG. 3, the device includes following units.

A determining unit 31 is configured to determine the number of systems of a terminal and capacities of storage spaces required by the systems.

A partitioning unit 32 is configured to partition the storage space of the storage card into areas according to the number of the systems and the capacities of the storage spaces required by the systems.

An establishing unit 33 is configured to establish a mapping relationship between the partitioned areas and the systems, so that each of the systems can store data into or read data from the corresponding area of the storage card.

For the data processing device for the storage card provided by the embodiment of the present disclosure, the number of the systems of the terminal and the capacities of the storage spaces required by the systems can be determined, the storage space of the storage card is partitioned according to the number of the systems and the capacities, and the mapping relationship between the partitioned areas and the systems is established, so that each of the systems can store data into or read data from the corresponding area of the storage card. In the present technology, when multiple systems are run in the smart terminal, the rate and accuracy of processing the data of the secure digital card by the smart terminal reduce. Comparing with the technology, in the present disclosure, each of the systems can store data into or read data from the corresponding area of the storage card, and cannot store data into or read data from the area which is not mapped to any of the systems or the area which does not correspond to the system, thus an interleaving phenomenon that data of the other systems is accessed can be avoided, and the rate and accuracy of processing the data of the secure digital card by the smart terminal increases.

An embodiment of the present disclosure further provides a data processing device for a storage card to specifically illustrate the device of FIG. 3. The number of the partitioned areas is greater than or equal to that of the systems. Each of the systems corresponds to one of the partitioned areas. The capacity of the storage space of each of the partitioned areas is greater than or equal to that of the storage space required by the corresponding system.

For the data processing device for the storage card provided by the embodiment of the present disclosure, the number of the partitioned areas is greater than or equal to that of the systems, each of the systems corresponds to one of the partitioned areas, and the capacity of the storage space of each of the partitioned areas is greater than or equal to that of the storage space required by the corresponding system, thus each of the systems assigned with a corresponding area can be ensured, each of the systems can store data into or read data from the corresponding area of the storage card, an interleaving phenomenon that data of the other systems is accessed can be avoided, the complexity of storing or reading data reduces, and the rate and accuracy of processing the data of the secure digital card by the smart terminal increase.

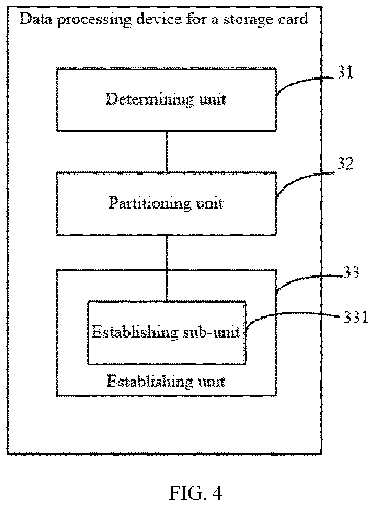

An embodiment of the present disclosure further provides a data processing device for a storage card to specifically illustrate the device of FIG. 3. As illustrate by FIG. 4, the establishing unit 33 further includes an establishing sub-unit 331 configured to establish a mapping relationship between physical addresses of the partitioned areas and the systems.

For the data processing device for the storage card provided by the embodiment of the present disclosure, the mapping relationship between physical addresses of the partitioned areas and the systems is established, each of the systems can store data into or read data from the corresponding area of the storage card, and cannot store data into or read data from the areas which correspond to the other systems or the area which does not correspond to any of the systems, therefore, an interleaving phenomenon that data of the other systems is accessed can be avoided, the complexity of storing or reading data reduces, and the rate and accuracy of processing the data of the secure digital card by the smart terminal increase.

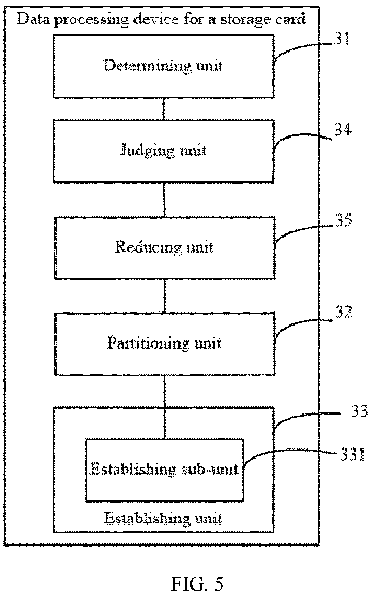

An embodiment of the present disclosure further provides a data processing device for a storage card to specifically illustrate the device of FIG. 3. As illustrated by FIG. 5, before the partitioning unit 32, the device further includes following units.

A judging unit 34 is configured to judge whether a sum of the capacities of the storage spaces required by the systems is greater than a capacity of the storage space of the storage card.

A reducing unit 35 is configured to reduce the sum of the capacities of the storage spaces required by the systems until the sum of the capacities of the storage spaces required by the systems is not greater than the capacity of the storage space of the storage card when the sum of the capacities of the storage spaces required by the systems is greater than the capacity of the storage space of the storage card.

For the data processing device for the storage card of the embodiment of the present disclosure, whether the sum of the capacities of the storage spaces required by the systems is greater than the capacity of the storage space of the storage card is determined. If yes, the sum of the capacities of the storage spaces required by the systems is reduced until the sum of the capacities of the storage spaces required by the systems is not greater than the capacity of the storage space of the storage card, which can ensure that each system can be assigned with a corresponding area, and the capacity of each area is not less than the capacity of the storage space required by the corresponding system.

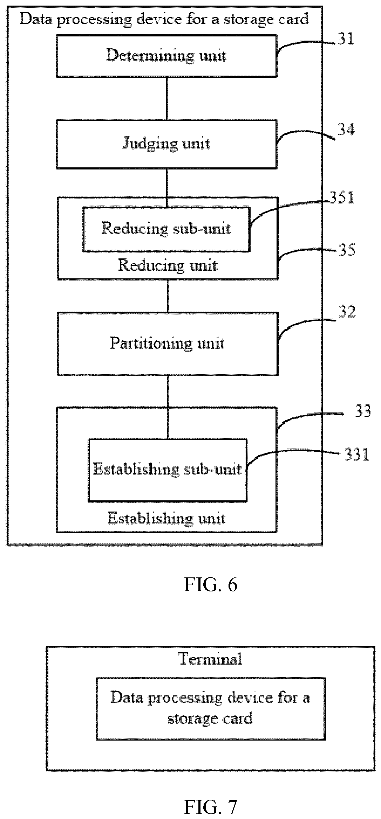

An embodiment of the present disclosure further provides a data processing device for a storage card to specifically illustrate the device of FIG. 5. As illustrated by FIG. 6, the reducing unit 35 further includes a reducing sub-unit 351 configured to reduce the number of the systems of the terminal, or reduce the capacity of at least one of the storage spaces required by the systems.

For the data processing device for the storage card provided by the embodiment of the present disclosure, by reducing the number of the systems of the terminal, or reducing the capacity of at least one of the storage spaces required by the systems, it can be ensured that the sum of the capacities of the storage spaces required by the systems is not greater than the capacity of the storage space of the storage card.

An embodiment of the present disclosure further provides a terminal for processing data of a storage card. As illustrated by FIG. 7, the terminal includes any of the data processing device for a storage card illustrated by any of FIGS. 3-6.

Those skilled in the art can clearly understand that for convenience and simplicity, the above division of various functional modules is just an illustrative example. In actual use, the above functions can be finished by different functional modules according to needs. That is, the interior structure of the device is divided into different functional modules to finish all of or a part of the above functions. The corresponding process of the above method embodiments can be referred to illustrate the detailed work process of the system, the device, and the units, which will not repeated herein.

The foregoing descriptions are merely embodiments of the present disclosure, but not intended to limit the protection scope of the present disclosure. Any variations or substitutions readily figured out by persons skilled in the art within the technical scope disclosed in the present disclosure should fall within the protection scope of the present disclosure. Therefore, the protection scope of the present disclosure should be subject to the protection scope of the claims.

## Claims

1. A data processing method for a storage card, comprising:
determining the number of systems of a terminal and capacities of storage spaces required by the systems;
partitioning a storage space of the storage card into areas according to the number of the systems and the capacities of the storage spaces required by the systems; and
establishing a mapping relationship between the partitioned areas and the systems, so that each of the systems stores data into or reads data from the corresponding area of the storage card.

2. The method of claim 1, wherein the number of the partitioned areas is greater than or equal to that of the systems, each of the systems corresponds to one of the partitioned areas, and the capacity of each of the partitioned areas is greater than or equal to that of the storage space required by the corresponding system.

3. The method of claim 1, wherein establishing the mapping relationship between the partitioned areas and the systems comprises:
establishing a mapping relationship between physical addresses of the partitioned areas and the systems.

4. The method of claim 1, wherein before partitioning the storage space of the storage card according to the number of the systems and the capacities of the storage spaces required by the systems, the method further comprises:
determining whether a sum of the capacities of the storage spaces required by the systems is greater than a capacity of the storage space of the storage card; and
when the sum of the capacities of the storage spaces required by the systems is greater than the capacity of the storage space of the storage card, reducing the sum of the capacities of the storage spaces required by the systems until the sum of the capacities of the storage spaces required by the systems is not greater than the capacity of the storage space of the storage card.

5. The method of claim 4, wherein reducing the sum of the capacities of the storage spaces required by the systems comprises:
reducing the number of the systems of the terminal; or
reducing the capacity of at least one of the storage spaces required by the systems.

6. A data processing device for a storage card, comprising:
a determining unit configured to determine the number of systems of a terminal and capacities of storage spaces required by the systems;
a partitioning unit configured to partition a storage space of the storage card into areas according to the number of the systems and the capacities of the storage spaces required by the systems; and
an establishing unit configured to establish a mapping relationship between the partitioned areas and the systems, so that each of the systems stores data into or reads data from the corresponding area of the storage card.

7. The device of claim 6, wherein the number of the partitioned areas is greater than or equal to that of the systems, each of the systems corresponds to one of the partitioned areas, and the capacity of each of the partitioned areas is greater than or equal to that of the storage space required by the corresponding system.

8. The device of claim 6, wherein the establishing unit further comprises:
an establishing sub-unit configured to establish a mapping relationship between physical addresses of the partitioned areas and the systems.

9. The device of claim 6, wherein before the portioning unit, the device further comprises:
a judging unit configured to judge whether a sum of the capacities of the storage spaces required by the systems is greater than a capacity of the storage space of the storage card; and
a reducing unit configured to reduce the sum of the capacities of the storage spaces required by the systems until the sum of the capacities of the storage spaces required by the systems is not greater than the capacity of the storage space of the storage card when the sum of the capacities of the storage spaces required by the systems is greater than the capacity of the storage space of the storage card.

10. The device of claim 9, wherein the reducing unit further comprises:
a reducing sub-unit configured to reduce the number of the systems of the terminal; or
the reducing sub-unit is further configured to reduce the capacity of at least one of the storage spaces required by the systems.

11. A terminal for processing data of a storage card comprising the device described in any of claims 6-10.
